(19) Europäisches Patentamt
European Patent Office
Office européen des brevets

(11) Publication number: **0 036 947**
**B1**

(12) # EUROPEAN PATENT SPECIFICATION

(45) Date of publication of patent specification: **09.11.83**

(51) Int. Cl.³: **B 01 D 13/04,** C 08 L 81/06

(21) Application number: **81101354.9**

(22) Date of filing: **25.02.81**

(54) **Method for preparing a membrane of a film-forming non-sulfonated sulfone polymer.**

(30) Priority: **28.03.80 US 135035**

(43) Date of publication of application:
**07.10.81 Bulletin 81/40**

(45) Publication of the grant of the patent:
**09.11.83 Bulletin 83/45**

(84) Designated Contracting States:
**DE GB IT NL**

(56) References cited:
**FR - A - 2 005 334**
**FR - A - 2 138 334**
**FR - A - 2 277 847**
**FR - A - 2 424 750**
**GB - A - 2 000 720**
**US - A - 3 567 810**
**US - A - 3 855 122**

(73) Proprietor: **PENNWALT CORPORATION**
**Pennwalt Building Three Parkway**
**Philadelphia Pennsylvania 19102 (US)**

(72) Inventor: **Benzinger, William Donald**
**408 Green Hill Lane**
**Berwyn Pennsylvania 19312 (US)**
Inventor: **Hinde, George Morralee**
**32 Mancel Road**
**Media Pennsylvania 19063 (US)**
Inventor: **Toal, Margaret Gavin**
**2000 Valley Forge Circle No. 1425**
**King of Prussia Pennsylvania 19406 (US)**

(74) Representative: **Lorenz, Eduard et al,**
**Rechtsanwälte Eduard Lorenz - Bernhard Seidler**
**Margrit Seidler - Dipl.-Ing. Hans-K. Gossel Dr. Ina**
**Philipps - Dipl.-Chem. Rainer Wulf**
**Widenmayerstrasse 23**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 036 947 B1**

Courier Press, Leamington Spa, England.

# Method for preparing a membrane of a film-forming non-sulfonated sulfone polymer

## BACKGROUND OF THE INVENTION

### The Problem

Membranes to be used for pressure-activated separation processes such as ultrafiltration and reverse osmosis should have high flux, high retention of materials with large molecular or particle size, and sharp molecular size cut-off. In other words, molecules of solvent and of materials of smaller molecular size than the size desired to be retained should pass rapidly and completely through the membrane at relatively low applied pressure, whereas molecules or particles of size equal to or larger than the size desired to be retained should not be able to enter the pores of the membrane.

In practice, no membrane has all pores of exactly the same size, and therefore there is always a range of molecular sizes that are partially but not totally retained by the membrane. The smaller this range of sizes partially retained by the membrane is, the sharper the molecular size cut-off of the membrane is said to be.

Because the size of molecules are difficult to measure, it is generally assumed that the sizes of molecules of similar types are proportional to the molecular weight of the molecules. Hence, instead of being characterized by the size of the molecules it will retain, a membrane is characterized by the molecular weight of the molecule it will retain. In like manner, the molecular weight cut-off of the membrane is a measure of the molecular size cut-off, and hence, the pore size of the membrane.

In addition to the above mentioned properties a membrane must have good long term resistance to the thermal and chemical environment that it will encounter in service. Because many commercial ultrafiltration processes are best operated at temperatures up to about 100°C and involve processing of acidic or basic materials, the membrane should withstand such temperatures and be stable over a wide pH range. The thermal and chemical stability of a membrane is principally determined by the chemical nature of the polymer used to form the membrane.

The class of polymers known as polysulfones and/or polyether/sulfones have been shown to be advantageous for forming chemically and thermally resistant ultrafiltration membranes. One example of such polysulfone polymer is a material sold under the trade name Udel P 1700 by Union Carbide corporation. The chemical structure of this polymer is

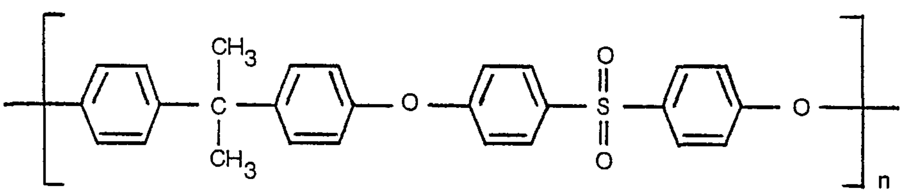

Methods for casting asymmetric membranes from this class of polymers have been disclosed for example in US—A—3,567,810, 3,615,024, 3,632,404, 3,651,030, 3,691,068, 3,709,841, 3,855,122, 3,912,834, 4,005,012, 4,026,977 and 4,038,351, as well as in FR—A—2424750.

The general procedure consists of forming a solution of the polymer in a suitable solvent or mixture of solvents, sometimes with the addition of non-solvents or flux-promoting agents, casting a film of the solution, evaporating a portion of the solvent, and gelation of the membrane by immersion of the film in a liquid that is a non-solvent for the polymer.

The properties of the resulting membrane, such as flux and retention characteristics, depend primarily on the choice of solvent and other additives in the casting solution and on the conditions employed during the evaporation and gelation procedures. For example in US—A—3,567,810, Baker discloses that the properties of the membrane are improved when the film is exposed to hot gas or air for 5 to 60 seconds during the evaporation step prior to gelation.

In the above mentioned patents, a number of solvents such as dimethyl formamide, dimethyl acetamide, dimethyl sulfoxide, N-methyl pyrrolidone, methyl cellosolve, and mixtures thereof are disclosed. In US—A—3,855,122 hexamethyl phosphoramide is mentioned as a solvent for sulfonated polyarylether/sulfone, but no example of its use is given. In FR—A—2277847 hexamethyl phosphoramide is also mentioned as a solvent for sulfonated polysulfones, as well as a solvent suitable for preparing and dissolving non sulfonated modified polysulfones. In preparing a membrane the solution of a modified polysulfone is casted on a solid surface, a portion of the solvent is evaporated and the so produced film is immersed in a gelation medium.

Although some of the polysulfone membranes disclosed in the above-mentioned patents have high water permeability, none of them have good retention of lower molecular weight macromolecules such as macromolecules with molecular weights of 20,000 or less and none demonstrate sharp molecular weight cut-offs.

In general when the pore size of a membrane is decreased so that it retains lower molecular weight species, the water permeability also decreases. Thus the better the retention of the membrane becomes for lower molecular weight molecules, the lower the water permeability becomes.

STATEMENT OF THE INVENTION

This invention relates to a method of preparing a membrane of a film-forming, non-sulfonated sulfone polymer, which membrane has the following characteristics when used as a filtration means:

a) a water flux of at least 0.2 ml/cm²/min. at 2.07 bars gauge,

b) a retention of at least 95% of polyethylene glycol (PEG) having an average molecular weight in the range of 15000 and 20000,

c) a retention of at least 80% of polyethylene glycol having an average molecular weight of about 6000, and

d) a retention of less than 10% of polyethylene glycol having an average molecular weight of about 1000. The water flux of the membrane is preferably at least 1.0 ml./cm²/min., the retention of PEG (MW 15000—20000) is preferably at least 99% and the retention of PEG (MW 6000) is preferably at least 90%.

According to the invention the method of preparing a membrane of a film-forming non-sulfonated sulfone polymer comprises dissolving said sulfone polymer in hexamethyl phosphoramide to form a solution containing from 10 to 25, preferably 14 to 18, weight percent polymer, casting said solution on a solid surface to form a film, evaporating a portion of the solvent from the film, and then immersing said film in a gelation medium such as water at a temperature ranging from —10°C to +50°C for a period of from 1 minute to 30 min. to form the membrane.

Optionally, the gelled membrane may subsequently be dimensionally stabilized by heat treatment thereof.

The preparation of the porous membranes by the process of this invention and the ultrafiltration properties of the resultant membranes are demonstrated by the following examples.

Example 1

A solution containing 15% polysulfone resin in hexamethyl phosphoramide was prepared by stirring a mixture of polysulfone resin pellets (Udel P—1700, Union Carbide Corp.) at about 35°C for about 4 hours until all of the polymer had dissolved. The solution was allowed to stand undisturbed for about 20 min. to allow air bubbles to rise to the surface and escape. The resulting solution was clear and bubble free.

A 254 μm film of this solution was cast onto a smooth, clean glass plate. Tape had been placed along the edges of the plate prior to casting to assure adherence of the film to the plate during subsequent processing steps. Immediately after the film had been cast, the plate and cast film were placed under an electric heater at a temperature of 88°C for 1 min. The plate and film were then removed and immersed in a water bath at ambient temperature for gelation. After 30 min. the resulting membrane was cut free of the tape, removed from the glass plate, and stored in water at ambient temperature.

The above produced membrane was evaluated for flux and retention at 2.07 bars gauge using distilled water, a blue dextrane (M.W. 2,000,000) solution (Blue Dextran 2000, registered Trade Mark), and polyethylene glycol ("Carbowax", registered Trade Mark) solutions.

Data are shown in Table 1.

Example 2

Membrane prepared as in Example 1 except that the polysulfone concentration in the casting solution was 20% by weight, temperature under heater during evaporation step was 52°C, and gelation was in iced water at about 2°C.

Example 3

Membrane prepared as in Example 1 except that evaporation was for 3 min. under heater at 65°C.

Example 4

Membrane prepared as in Example 3 except that evaporation was for 1 min.

Example 5

Membrane prepared as in Example 1 except that gelation was in iced water at about 2°C.

Example 6

Membrane prepared as in Example 1 except that the membrane was not restrained on the plate by tape or any other means and evaporation was at room temperature for 3 min.

To demonstrate that the membranes prepared according to the process of this invention have superior properties of flux and retention of lower molecular weight macromolecules, the following membranes were prepared using solvents disclosed in the prior art. The resulting membranes were evaluated as in Example 1. Results are shown in Table 2.

Example 7

A membrane was prepared following the same general procedure as in Example 1 except that the casting dope was a 15% solution of Udel P—1700 polysulfone in dimethyl formamide. The evaporation of the cast film was carried out for 1 min. under a heater at 68°C. Gelation was in water at ambient temperature.

Example 8

A membrane was prepared following the same general procedure as in Example 1 except that the casting dope was a 15% solution of Udel P—1700 polysulfone in dimethyl acetamide. The evaporation of the cast film was carried out for 1 min. under a heater at 38°C. Gelation was in water at ambient temperature.

Example 9

A membrane was prepared as in Example 8 except that the polysulfone concentration in the casting dope was 20% by weight.

Example 10

A membrane was prepared as in Example 8 except that the temperature during evaporation was 65°C.

Example 11

A membrane was prepared as in Example 10 except that the casting dope contained 5% by weight glycerol as a non-solvent or flux promoter in addition to the 15% polysulfone resin.

Example 12

A membrane was prepared as in Example 11 except that evaporation was carried out at ambient temperature for 3 min.

TABLE I

| Example | Feed* | Flux ml/cm² min. | Retention % |
|---|---|---|---|
| 1 | $H_2O$ | 1.3 | — |
| | BD | 0.3 | 100 |
| | C-20 | 0.1 | 99 |
| | C-6 | 0.1 | 81 |
| | C-1 | 0.7 | 1 |
| 2 | $H_2O$ | 0.24 | — |
| | BD | 0.1 | 100 |
| | C-20 | 0.05 | 99.9 |
| | C-6 | 0.06 | 92 |
| | C-1 | 0.1 | 6 |
| 3 | $H_2O$ | 2.1 | — |
| | BD | 0.2 | 100 |
| | C-20 | 0.07 | 95 |
| 4 | $H_2O$ | 2.4 | — |
| | BD | 0.2 | 100 |
| | C-20 | 0.07 | 99 |
| 5 | $H_2O$ | 1.6 | — |
| | BD | 0.2 | 100 |
| | C-20 | 0.07 | 99 |
| 6 | $H_2O$ | 1.7 | — |
| | BD | 0.3 | >98 |
| | C-20 | 0.04 | 98 |

*BD = 0.1% aqueous Blue Dextran 2000 solution (M. W. 2,000,000)
C-20 = 1% aqueous Carbowax 20M solution (M. W. 15,000—20,000)
C—6 = 1% aqueous Carbowax 6000 solution (M. W. 6,000)
C-1 = 1% aqueous Carbowax 1000 solution (M.W. 1,000)

"Blue Dextran 2000" and "Carbowax" are registered Trade Marks.

TABLE 2

| Example | Feed | Flux | Retention |
|---|---|---|---|
| | | ml/cm² min. | % |
| 7 | $H_2O$ | 0.04 | — |
| | BD | 0.04 | >98 |
| | C-20 | 0.02 | 94 |
| 8 | $H_2O$ | 0.05 | — |
| | BD | 0.03 | 98 |
| | C-20 | 0.02 | 98 |
| 9 | $H_2O$ | <0.001 | — |
| 10 | $H_2O$ | 0.001 | — |
| 11 | $H_2O$ | 0.6 | — |
| | BD | 0.09 | 96 |
| | C-20 | 0.03 | 88 |
| 12 | $H_2O$ | 0.16 | — |
| | BD | 0.11 | 97 |
| | C-20 | 0.05 | 94 |

In evaluating the properties of membranes it is important that the membranes be thoroughly leached or rinsed with water to remove all residual solvents, preservatives, wetting agents, or other contaminants before determination of flux and retention. The membranes prepared according to the examples in this invention were kept wet with water at all times prior to testing. For determination of flux and retention the filtration is carried out in a cell that provides flow of the test fluid across the surface of the membrane to minimize concentration polarization, that is, build up of a layer of concentrated solution at the surface of the membrane. An Amicon TCF 10 ultrafiltration cell is an example of such a test cell. For each determination of retention, a solution of a single compound with a relatively narrow molecular weight range in water must be used. If a mixture of materials, one having a molecular weight high enough that it would ordinarily be retained by the membrane and the other having a molecular weight low enough that it would not ordinarily be retained to any significant extent by the membrane, were used, a higher than normal retention of the lower molecular weight material would likely be found because the molecules of the higher molecular weight material that could not pass through the pores of the membrane would build up at the surface of the membrane and impede the transport of the lower molecular weight material to the membrane surface.

In evaluating the membranes prepared as described in the examples, the water flux was determined at 2.07 bars gauge with distilled water on a well flushed membrane before the membrane was exposed to any test solution. If the water flux is determined after exposure of the membrane to a test solution, it may be lower than the initial water flux. Following determination of the water flux, the flux and retention of the other solutions at 2.07 bars gauge was determined in the order listed. The membrane was thoroughly rinsed and distilled water between each determination. For determination of retention, four samples of permeate, each containing at least 10 ml, were collected and analyzed separately. Colorimetric analysis was used for Blue Dextran (registered Trade Mark) solutions and gravimetric analysis for the Carbowax (registered Trade Mark) solutons. Retention was calculated as

$$R = \left(\frac{\text{conc. feed} - \text{conc. permeate}}{\text{conc. feed}}\right) 100$$

There was no significant difference or trend in the four results for a given test solution and a given membrane.

Process Requirements

The concentration of the film forming non-sulfonated sulfone polymer dissolved in hexamethyl phosphoramide solvent to form the solution for casting the membrane should be in the range of 10 to 25 weight percent, preferably 14 to 18 weight percent. The temperature of the solution should be high enough to dissolve the polymer to form a clear solution but below the boiling point of the solvent. Preferably, the temperature should be in the range of 85 to 100°C.

The properties of the membrane are not significantly affected by their formed thickness probably due to the fact that the membranes are asymmetric and ultrafiltraton takes place at a very thin "skin" or layer of critical porosity at the top surface, the rest of the membrane being more porous and offering

little resistance to flow. The preferred thickness of the film cast to form the membrane is from 127 mm to 381 mm.

The solution of the sulfone polymer in hexamethyl phosphoramide is cast on a smooth solid surface or substrate. The solvent is then allowed to evaporate from the formed sheet but only to an extent necessary to provide a material which will have the desired porosity after treatment with the gelation medium. Evaporaton may be brought about by exposure of the formed (cast) sheet to air at room temperature for from 1 to 10 min. or it may be hastened by increasing the temperature near the surface of the film, for example by placing the film under an electric heater.

The gelation treatment, after the evaporation step, is required to convert the liquid film into a solid membrane. The gelation medium is kept at a temperature ranging from −10 to +50°C, preferably 0 to 25°C, and the dwell time for exposure of the sheet to the gelation medium must be sufficient to solidify the membrane, i.e. at least 1 min. The membrane may be left in the gelation medium for a longer time if desired.

The cast film may be secured to the casting surface, for example by placing tape along the outer edge of the casting plate, during the evaporation and gelation steps, but this procedure is not necessary as demonstrated by Example 6.

**Claims**

1. A method of preparing a membrane of a film-forming, non-sulfonated sulfone polymer comprising dissolving said sulfone polymer in hexamethyl phosphoramide to form a solution containing from 10 to 25 weight percent polymer, casting said solution on a solid surface to form a film, evaporating a portion of the solvent from the film, and then immersing said film in a gelation medium therefor at a temperature ranging from −10°C to 50°C for a period of from 1 to 30 minutes to form said membrane.

2. The process of claim 1 wherein the solution contains from 14 to 18 weight percent of the said sulfone polymer.

3. The process of claims 1 or 2 wherein said sulfone polymer is one having repeating units of the following structure:

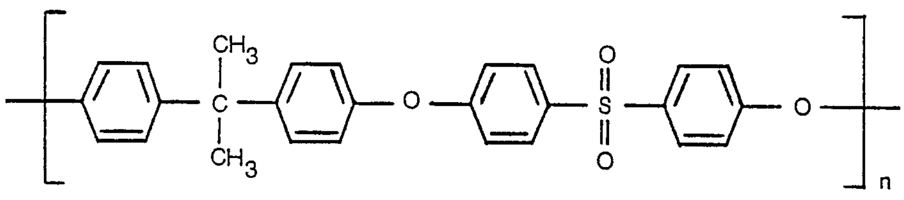

where n is an integer of sufficient length to provide a film-forming polymer.

**Revendicatons**

1. Méthode en vue de la préparation d'une membrane d'un polymère sulfonique filmogène non-sulfoné comprenant la dissolution dudit polymère sulfonique dans du phosphoramide hexaméthylique pour former une solution contenant de 10 à 25 pourcent en poids de polymère, la coulée de ladite solution sur une surface solide en vue de former un film, l'évaporation d'une partie due solvant contenu dans le film et l'immersion dudit film dans un moyen de gelification à une température allant de −10° à +50°C pendant une période allant de 1 à 30 minutes en vue de former ladite membrane.

2. Procédé de la revendication 1 caractérisé par le fait que la solution contient de 14 à 18 pourcent de poids dudit polymère sulfonique.

3. Procédé selon revendications 1 ou 2 caractérisé par le fait que ledit polymère sulfonique est du type ayant des unités répétitives de la structure suivante:

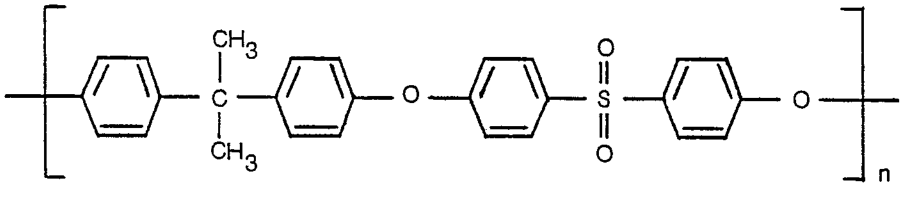

dans laquelle n est un nombre entier de longueur suffisante pour constituer un polymère filmogène.

**Patentansprüche**

1. Verfahren zum Herstellen einer Membran aus einem filmbildenden, nichtsulfonierten Sulfonpolymerisat, in dem durch Auflösen des Sulfonpolymerisats in Hexamethylphosphoramid eine Lösung mit einem Polymerisatgehalt von 10 bis 25 Gew.% gebildet, die Lösung unter Bildung eines Films auf eine Festkörperoberfläche gegossen, ein Teil des Lösungsmittels aus dem Film verdampft und dann zur Bildung der Membran der Film 1 bis 30 Minuten lang in ein Gelationsmedium für den Film getaucht wird, das sich auf einer Temperatur von —10° bis 50°C befindet.

2. Verfahren nach Anspruch 1, dadurch gekennzeichnet, daß die Lösung 14 bis 18 Gew.% des Sulfonpolymerisats enthält.

3. Verfahren nach Anspruch 1 oder 2, dadurch gekennzeichnet, daß das Sulfonpolymerisat Repetiereinheiten mit folgender Struktur

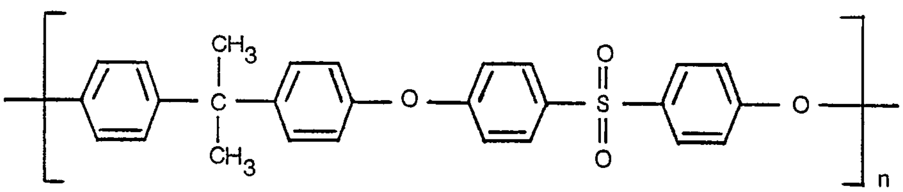

enthält, wo n eine ganze Zahl ist, die einer für ein filmbildendes Polymerisat genügenden Länge entspricht.